(19) Europäisches Patentamt
European Patent Office
Office européen des brevets

(11) **EP 3 829 243 B1**

(12) **EUROPEAN PATENT SPECIFICATION**

(45) Date of publication and mention
of the grant of the patent:
**28.02.2024 Bulletin 2024/09**

(21) Application number: **19860582.6**

(22) Date of filing: **29.08.2019**

(51) International Patent Classification (IPC):
*H04W 72/04* (2023.01)     *H04B 7/06* (2006.01)

(52) Cooperative Patent Classification (CPC):
**H04B 7/0695; H04B 7/063; H04L 5/0023;**
H04B 7/0619

(86) International application number:
**PCT/CN2019/103233**

(87) International publication number:
**WO 2020/052443 (19.03.2020 Gazette 2020/12)**

(54) **RESOURCE MANAGEMENT METHOD AND COMMUNICATION APPARATUS**

RESSOURCENVERWALTUNGSVERFAHREN UND KOMMUNIKATIONSVORRICHTUNG

PROCÉDÉ DE GESTION DE RESSOURCES ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2018 CN 201811074834**

(43) Date of publication of application:
**02.06.2021 Bulletin 2021/22**

(73) Proprietor: **Huawei Technologies Co., Ltd.
Longgang
Shenzhen, Guangdong 518129 (CN)**

(72) Inventors:
  • **GUAN, Peng**
    **Shenzhen, Guangdong 518129 (CN)**
  • **LIU, Kunpeng**
    **Shenzhen, Guangdong 518129 (CN)**
  • **LIU, Xiangpu**
    **Shenzhen, Guangdong 518129 (CN)**
  • **ZHANG, Xi**
    **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2017/099830     CN-A- 101 521 534
CN-A- 104 144 027     CN-A- 108 347 272
CN-A- 108 347 272     US-A1- 2013 045 690
US-A1- 2014 334 566     US-A1- 2018 069 606
US-A1- 2018 212 666

## Description

## TECHNICAL FIELD

This application relates to the communications field, and more specifically, to a resource management method and a communications apparatus.

## BACKGROUND

Beam-based communication can bring a higher antenna gain. Especially in a high-frequency communication environment, beam-based communication can overcome fast attenuation of a high-frequency signal.

When a network device and a terminal device communicate with each other through beams, the terminal device needs to measure a plurality of beams sent by the network device, to select a relatively good beam from the plurality of beams, and report the relatively good beam to the network device.

In the prior art, after measuring the plurality of beams sent by the network device, the terminal device usually selects a to-be-reported beam based on reference signal received power (RSRP). In other words, the terminal device reports a plurality of beams with relatively strong RSRP to the network device after measurement. The plurality of beams with relatively strong RSRP are used for subsequent communication between the network device and the terminal device.

However, a correlation between beams reported by the terminal device based on RSRP is usually relatively high, and the beam may not necessarily meet a requirement of the network device. For example, it is assumed that the network device wants to make two beams serve as a backup for each other, that is, if one beam is blocked, communication can be restored by using the other beam. In this case, it is required that the two beams cannot be closely adjacent in space (that is, a relatively low correlation between the two beams is required).

WO 2017/099830 A1 describes techniques for generating BRS-RP (beam reference signal received power) reports based on configured criteria. An apparatus includes a processor to: receive, from a coupled receiver circuitry, a set of beam reference signal (BRS) configuration parameters and a distinct set of BRS signals associated with each of one or more transmit beams; calculate a BRS received power (BRS-RP) for each of the one or more transmit beams based on the distinct set of BRS signals received via that transmit beam; and make a determination whether to trigger a BRS-RP report. The determination is based on the BRS configuration parameters and on at least one of the calculated BRS-RPs; the BRS-RP report is based on the determination being made to trigger the BRS-RP report.

US 2014/334566 A1 describes a method for operating a receiving end in a wireless communication system. Subset information on analog beams of a transmitting end is received from a transmitting end. A combination of transmit beams to be used for data signal transmission to the receiving end is determined on the basis of the subset information, wherein the subset information indicates at least one subset into which the analog beams are classified, and each analog beam of the at least one subset has a correlation equal to or less than a threshold, with one another. An apparatus for a receiving end includes a communication unit configured to receive subset information on analog beams of a transmitting end, from the transmitting end, and a controller configured to determine a combination of transmit beams to be used for data signal transmission to the receiving end, on the basis of the subset information.

CN 108 347 272 A describes a method for performing communication based on a beam group. A terminal device groups transmit beams of a network device based on a receive beam of the terminal device. The terminal device further determines spatial direction information of each beam group. Furthermore, the method may include the terminal device sending, to the network device, the spatial direction information of each beam group or information about a correlation between beam groups determined based on the spatial direction information.

US 2018/212666 A1 describes a method by which a terminal reports a beam index to a base station in a wireless access system. The beam index reporting method comprises the steps of: receiving a plurality of reference signals from the base station; measuring a plurality of beams by using the plurality of reference signals; reporting an index of a first preferential beam among the plurality of beams to the base station; and reporting, to the base station, information on at least one second preferential beam determined on the basis of the first preferential beam, wherein the information on at least one second preferential beam is information on an index difference between the first preferential beam and the at least one second preferential beam.

US 2018/069606 A1 describes a terminal device in a wireless communication system configured to control its transceiver to communicate through a cell determined based on information regarding a strength of a received signal for a first cell and a path diversity (PD) for the first cell. The PD comprises information regarding paths associated with the first cell.

## SUMMARY

This application provides a resource management method and a communications apparatus. According to the method, a terminal device can report a beam to a network device based on a requirement of the network device.

According to a first aspect, a resource management method is provided. The method provided in the first aspect may be performed by a terminal device, or may be performed by a chip disposed in a terminal device. This is not limited in this application.

Specifically, the method includes: The terminal device receives a plurality of beams sent by a network device; the terminal device determines a correlation of at least two beams in the plurality of beams based on index numbers of the at least two beams; and the terminal device reports the at least two beams to the network device, where a correlation between any two of the at least two beams meets a requirement of the network device. The at least two beams comprise a first beam and a second beam, and the first beam and the second beam are any two beams in the at least two beams. The determining, by the terminal device, a correlation of at least two beams based on index numbers of the at least two beams comprises determining, by the terminal device, a Hamming distance between the first beam and the second beam based on the index numbers of the first beam and the second beam and determining, by the terminal device, the correlation between the first beam and the second beam based on the Hamming distance; wherein the numbering of the plurality of beams is such that after index numbers of the plurality of beams are converted into binary bit sequences, a quantity of different bits between binary bit sequences corresponding to index numbers of adjacent beams is the smallest.

Optionally, the network device sends configuration information to the terminal device.

Optionally, the configuration information may carry a Hamming distance threshold.

According to a second aspect, a resource management method is provided. The method provided in the second aspect may be performed by a network device, or may be performed by a chip disposed in a network device. This is not limited in this application.

Specifically, the method includes: The network device sends a plurality of beams and configuration information to a terminal device, where the configuration information is used by the terminal device to determine a correlation between any two of the plurality of beams; and the network device receives at least two beams reported by the terminal device, where a correlation between any two of the at least two beams meets a requirement of the network device, and the plurality of beams include the at least two beams.

The configuration information carries a Hamming distance threshold and the numbering of the plurality of beams is such that after index numbers of the plurality of beams are converted into binary bit sequences, a quantity of different bits between binary bit sequences corresponding to index numbers of adjacent beams is the smallest.

According to a seventh aspect, a computer-readable storage medium is provided. The computer-readable storage medium stores program code for being executed by a communications device. The program code includes an instruction used to perform the method according to any one of the foregoing aspects or the possible implementations of the foregoing aspects.

The computer-readable storage medium stores program code for being executed by a terminal device, where the program code includes an instruction used to perform the method according to any one of the first aspect or the possible implementations of the first aspect.

The computer-readable medium stores program code for being executed by a network device, where the program code includes an instruction used to perform the method according to any one of the second aspect or the possible implementations of the second aspect.

According to an eighth aspect, this application provides a computer program product including an instruction. When the computer program product is run on a communications device, the communications device is enabled to execute an instruction in the method according to any one of the foregoing aspects or the possible implementations of the foregoing aspects.

When the computer program product is executed on a terminal device, the terminal device is enabled to execute an instruction in the method according to any one of the first aspect or the possible implementations of the first aspect.

When the computer program product is executed on a network device, the network device is enabled to execute an instruction in the method according to any one of the second aspect or the possible implementations of the second aspect.

## BRIEF DESCRIPTION OF DRAWINGS

FIG. 1 is a schematic diagram of a communications system applicable to a signal transmission method according to an example of this application;

FIG. 2 is covered by the claimed invention and is a schematic flowchart of a resource management method according to an embodiment of this application;

FIG. 3 is a beam number pattern corresponding to a beam numbering method according to an example of this application;

FIG. 4 is a beam number pattern corresponding to another beam numbering method according to an example of this application;

FIG. 5 is a beam number pattern corresponding to still another beam numbering method according to an embodiment of this application;

FIG. 6 is a beam number pattern corresponding to still another beam numbering method according to an example of this application;

FIG. 7 is a schematic block diagram of a communications apparatus according to an example of this application;

FIG. 8 is a schematic block diagram of another communications apparatus according to an example of this application;

FIG. 9 is a schematic block diagram of still another communications apparatus according to an example of this application;

FIG. 10 is a schematic block diagram of still another communications apparatus according to an example of this application;

FIG. 11 is a schematic structural diagram of a terminal device according to an example of this application; and

FIG. 12 is a schematic structural diagram of a network device according to an example of this application.

## DESCRIPTION OF EMBODIMENTS

The following describes technical solutions of this application with reference to the accompanying drawings.

The technical solutions of the embodiments of this application may be applied to various communications systems, such as: a global system for mobile communications (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a universal mobile telecommunications system (UMTS), a worldwide interoperability for microwave access (WiMAX) communications system, and a future 5th generation (5G) system or new radio (NR) system.

A terminal device in the embodiments of this application may be user equipment, an access terminal, a subscriber unit, a subscriber station, a mobile station, a mobile station, a remote station, a remote terminal, a mobile device, a user terminal, a terminal, a wireless communications device, a user agent, or a user apparatus. Alternatively, the terminal device may be a cellular phone, a cordless telephone set, a session initiation protocol (SIP) phone, a wireless local loop (WLL) station, a personal digital assistant (PDA), a handheld device having a wireless communication function, a computing device, another processing device connected to a wireless modem, a vehicle-mounted device, a wearable device, a terminal device in a future 5G network, or a terminal device in a future evolved public land mobile network (PLMN). This is not limited in the embodiments of this application.

A network device in the embodiments of this application may be a device configured to communicate with the terminal device. The network device may be a base transceiver station (BTS) in a global system for mobile communications (GSM) or a code division multiple access (CDMA) system, may be a NodeB (NB) in a wideband code division multiple access (WCDMA) system, may be an evolved NodeB (eNB or eNodeB) in an LTE system, or may be a radio controller in a cloud radio access network (CRAN) scenario. Alternatively, the network device may be a relay node, an access point, a vehicle-mounted device, a wearable device, a network device in a future 5G network, a network device in a future evolved PLMN network, or the like. This is not limited in the embodiments of this application.

In the embodiments of this application, the terminal device or the network device includes a hardware layer, an operating system layer running above the hardware layer, and an application layer running above the operating system layer. The hardware layer includes hardware such as a central processing unit (CPU), a memory management unit (MMU), and memory (also referred to as main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, contacts, word processing software, and instant communications software. In addition, a specific structure of an execution body of a method provided in the embodiments of this application is not specifically limited in the embodiments of this application, provided that a program that records code for the method provided in the embodiments of this application can be run to perform communication according to the method provided in the embodiments of this application. For example, the execution body of the method provided in the embodiments of this application may be the terminal device, the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (CD) or a digital versatile disc (DVD)), a smart card, and a flash memory component (for example, an erasable programmable read-only memory (EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry an instruction and/or data.

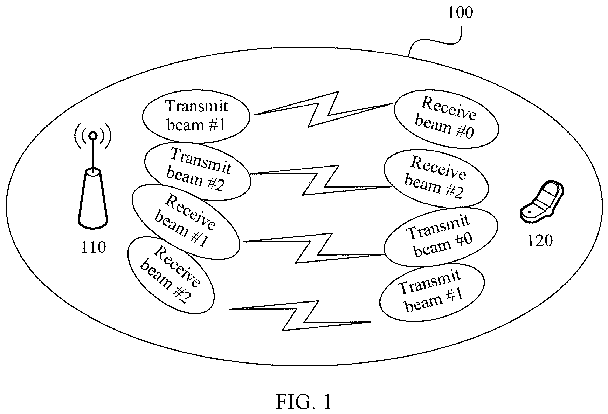

For ease of understanding of the examples of this application, first, a communications system used in the examples of this application is described in detail with reference to FIG. 1.

FIG. 1 is a schematic diagram of a communications system 100 applicable to an example of this application. As shown in FIG. 1, the communications system 100 includes at least one network device 110 and at least one terminal device 120. In the communications system 100, the terminal device and the network device may obtain one or more beam pairs with better communication in a beam management process. The beam pairs are <Bx, B'x> and <By, B'y>, where Bx represents a transmit beam of the network device, B'x represents a receive beam of the terminal device, By represents a transmit beam of the terminal device, and B'y represents a receive beam of the network device. For example, referring to FIG. 1, a transmit beam #1 of the network device and a receive beam #0 of the terminal device are a beam pair, and a transmit beam #2 of the network device and a receive beam #2 of the terminal device are a beam pair. A transmit beam #0 of the terminal device and a receive beam #1 of the network device are a beam pair, and a transmit beam #1 of the terminal device and a receive beam #2 of the network device are a beam pair.

In the communications system 100, beams of the terminal device 120 and the network device 110 need to be aligned to perform normal communication. Because the terminal device and the network device each can face toward a plurality of beam directions, a prerequisite for communication is that a correct beam indication is required. Specifically, in downlink communication, the network device needs to notify the terminal device of a receive beam that should be used to receive a signal sent by the network device subsequently, or notify the terminal device of a transmit beam that is used by the network device to send a signal subsequently. In uplink communication, the network device needs to notify the terminal device of a transmit beam that should be used to send an uplink signal, or notify the terminal device of a receive beam that is used by the network device to receive a signal sent by the terminal device. For example, in downlink transmission, the network device may notify the terminal device that the network device performs the transmission by using the transmit beam #1, so that the terminal device needs to perform receiving by using the receive beam #0. Alternatively, the network device performs the transmission by using the transmit beam #1, and notifies the terminal device to perform receiving by using the receive beam #0. For another example, in uplink transmission, the network device may notify the terminal device to perform the transmission by using the transmit beam #0, so that the network device performs receiving by using the receive beam #1. Alternatively, the network device may notify that a receive beam used by the network device is the receive beam #0, so that the terminal device needs to perform the transmission by using the transmit beam #0.

For ease of understanding the examples of this application, the following briefly describes several terms in this application.

1. Beam: The beam is a communication resource. The beam may be a wide beam, a narrow beam, or a beam of another type. A technology for forming the beam may be a beamforming (beamforming) technology or another technical means. The beamforming technology may be specifically a digital beamforming technology, an analog beamforming technology, or a hybrid digital/analog beamforming technology. Different beams may be considered as different resources. Same information or different information may be sent on different beams. Optionally, a plurality of beams having a same or similar communication feature may be considered as one beam. One beam may include one or more antenna ports, configured to transmit a data channel, a control channel, a sounding signal, and the like.

The beam may alternatively be understood as a spatial resource, and may be a transmit or receive precoding vector having an energy transmission direction. The energy transmission direction may indicate that a signal, received in a spatial position, on which precoding processing is performed by using the precoding vector has a relatively good receive power, for example, meets a received demodulation signal to noise ratio. The energy transmission direction may also indicate that same signals sent from different spatial positions and received by using the precoding vector have different receive powers. A same device (for example, a network device or a terminal device) may have different precoding vectors, and different devices may also have different precoding vectors, to be specific, the different precoding vectors correspond to different beams. For a configuration or a capability of a device, one device may use one or more of a plurality of different precoding vectors at a same moment, in other words, one or more beams may be formed at the same time. From perspectives of transmitting and receiving, beams can be classified into a transmit beam and a receive beam.

The transmit beam is a directional beam transmitted by a multi-antenna by using the beamforming technology.

The receive beam is also directional in a direction of receiving a signal, and is directed to a direction of arrival of a transmit beam as much as possible, to further improve a received signal-to-noise indicator and avoid interference between users.

The beam may also be referred to as a spatial filter (spatial filter), or referred to as a spatial filter (spatial filter) or a spatial parameter (spatial parameter). The transmit beam may also be referred to as a spatial transmit filter, and the receive beam may also be referred to as a spatial receive filter.

2. Beam pairing relationship: The beam pairing relationship is a pairing relationship between a transmit beam and a receive beam, namely, a pairing relationship between a spatial domain transmit filter and a spatial domain receive filter. A relatively large beamforming gain can be obtained by transmitting a signal between a transmit beam and a receive beam that have a beam pairing relationship.

In an implementation, a transmit end and a receive end may obtain a beam pairing relationship through beam training. Specifically, the transmit end may send a reference signal in a beam sweeping manner, and the receive end may also receive a reference signal in the beam sweeping manner. Specifically, the transmit end may form different directional beams in space in a beamforming manner, and may perform polling on a plurality of different directional beams, to transmit a reference signal by using the different directional beams, so that a power of transmitting the reference signal can reach a maximum value in a direction directed by using a transmit beam. The receive end may also form different directional beams in space in the beamforming manner, and may perform polling on a plurality of different directional beams, to receive a reference signal by using the different directional beams, so that a power of receiving the reference signal by the receive end can reach a maximum value in a direction directed by using a receive beam.

3. Reference signal and reference signal resource: The reference signal may be used for channel measurement, channel estimation, or the like. The reference signal resource may be used to configure a transmission attribute of the reference signal, for example, a time-frequency resource location, a port mapping relationship, a power factor, and a scrambling code. For details, refer to the current technology. A transmit end device may send the reference signal based on the reference signal resource, and a receive end device may receive the reference signal based on the reference signal resource.

The channel measurement in this application also includes beam measurement. To be specific, beam quality information is obtained by measuring the reference signal, and a parameter used to measure a beam quality includes a reference signal received power (RSRP). However, this is not limited thereto. For example, the beam quality may alternatively be measured by using parameters such as reference signal received quality (RSRQ), a signal-to-noise ratio (SNR), a signal to interference plus noise ratio (SINR), a block error rate (BLER), and a channel quality indicator (CQI). In the examples of this application, for ease of description, unless otherwise specified, the channel measurement may be considered as the beam measurement.

The reference signal may include, for example, a channel state information reference signal (CSI-RS), a synchronization signal block (SSB), or a sounding reference signal (SRS). Correspondingly, the reference signal resource may include a CSI-RS resource (CSI-RS resource), an SSB resource, or an SRS resource (SRS resource).

It should be noted that the foregoing SSB may also be referred to as a synchronization signal/physical broadcast channel block (SS/PBCH block), and the corresponding SSB resource may also be referred to as a synchronization signal/physical broadcast channel block resource (SS/PBCH block resource) that may be referred to as an SSB resource for short.

To distinguish between different reference signal resources, each reference signal resource may correspond to a reference signal resource identifier, for example, a CSI-RS resource identifier (CRI), an SSB resource identifier (SSBRI), or an SRS resource index (SRI). The SSB resource identifier may also be referred to as an SSB index (SSB index).

It should be understood that the reference signals and the corresponding reference signal resources enumerated above are merely examples for description, and shall not constitute any limitation on this application. This application does not exclude a possibility of defining another reference signal in a future protocol to implement a same or similar function.

4. Beam indication information: The beam indication information is used to indicate information about a beam used for transmission. The beam used for the transmission includes a transmit beam and/or a receive beam. The beam indication information may be one or more of the following: a beam identification (or number, index (index), identity (identity, ID), and the like), an uplink signal resource number, a downlink signal resource number, an absolute index of a beam, a relative index of a beam, a logical index of a beam, an index of an antenna port corresponding to a beam, an index of an antenna port group corresponding to a beam, an index of a downlink signal corresponding to a beam, a time index of a downlink synchronization signal block corresponding to a beam, beam pair link (BPL) information, a transmit parameter (Tx parameter) corresponding to a beam, a receive parameter (Rx parameter) corresponding to a beam, a transmit weight corresponding to a beam, a weight matrix corresponding to a beam, a weight vector corresponding to a beam, a receive weight corresponding to a beam, an index of a transmit weight corresponding to a beam, an index of a weight matrix corresponding to a beam, an index of a weight vector corresponding to a beam, an index of a receive weight corresponding to a beam, a receive codebook corresponding to a beam, a transmit codebook corresponding to a beam, an index of a receive codebook corresponding to a beam, or an index of a transmit codebook corresponding to a beam. The downlink signal may be one or more of the following: a synchronization signal, a broadcast channel, a broadcast signal demodulation signal, a synchronization signal/PBCH block (SSB), a channel state information reference signal (CSI-RS), a cell specific reference signal (CS-RS), a UE specific reference signal (US-RS), a downlink control channel demodulation reference signal (DMRS), a downlink data channel demodulation reference signal, or a downlink phase tracking reference signal. An uplink signal may be one or more of the following: an uplink random access sequence, an uplink sounding reference signal (SRS), an uplink control channel demodulation reference signal, an uplink data channel demodulation reference signal, or an uplink phase tracking reference signal.

The beam indication information may alternatively be represented as a transmission configuration indicator (TCI) or a TCI state. One TCI state includes one or more pieces of QCL information, and each piece of QCL information includes an ID of one reference signal (or one synchronization signal block) and one QCL type. For example, a terminal device may need to determine, based on a TCI state (which is usually carried on a physical downlink control channel (PDCCH)) indicated by a network device, a beam for receiving a physical downlink shared channel (PDSCH).

5. Quasi-co-location (QCL): The quasi-co-location is also referred to as quasi-colocation. A quasi-colocation relationship is used to indicate that a plurality of resources have one or more same or similar communication features. For the plurality of resources that have the quasi-colocation relationship, a same or similar communications configuration may be used. Details are as follows: Signals corresponding to antenna ports that have a QCL relationship have a same parameter, or a parameter (which may also be referred to as a QCL parameter) of an antenna port may be used to determine a parameter of another antenna port that has a QCL relationship with the antenna port, or two antenna ports have a same parameter, or a parameter difference between two antenna ports is less than a threshold. The parameter may include one or more of the following: a delay spread (delay spread), a Doppler spread (Doppler spread), a Doppler shift (Doppler shift), an average delay (average delay), an average gain, and a spatial receive parameter (spatial Rx parameters). The spatial receive parameter may include one or more of the following: an angle of arrival (AOA), an average AOA, an AOA spread, an angle of departure (AOD), an average angle of departure AOD, an AOD spread, a receive antenna spatial correlation parameter, a transmit antenna spatial correlation parameter, a transmit beam, a receive beam, and a resource identifier.

Spatial quasi-co-location (spatial QCL): The spatial QCL may be considered as a type of QCL. For spatial, understanding may be separately performed from a perspective of a transmit end or a receive end. From the perspective of the transmit end, if two antenna ports are spatially quasi-co-located, it means that beam directions corresponding to the two antenna ports are spatially consistent. From the perspective of the receive end, if the two antenna ports are spatially quasi-co-located, it means that the receive end can receive, in a same beam direction, signals sent by the two antenna ports.

6. Quasi-co-location assumption (QCL assumption): The QCL assumption means assuming whether there is a QCL relationship between two ports. A configuration and an indication of the quasi-co-location assumption may be used to help a receive end receive and demodulate a signal. For example, the receive end can assume that there is a QCL relationship between a port A and a port B, that is, a large-scale parameter that is of a signal and that is measured on the port A may be used for signal measurement and demodulation on the port B. The large-scale parameter may include a parameter of an antenna port.

7. Analog beamforming: Analog beamforming may be implemented by using a radio frequency. For example, a radio frequency chain (RF chain) adjusts a phase by using a phase shifter, to control a change in a direction of an analog beam. Therefore, one RF chain can generate only one analog beam at a same moment.

For communication that is based on analog beams, a beam at a transmit end and a beam at a receive end need to be aligned. Otherwise, a signal cannot be normally transmitted. Therefore, when the network device and the terminal device communicate with each other through beams, the terminal device needs to measure a plurality of beams sent by the network device, to select a relatively good beam from the plurality of beams, and report the relatively good beam to the network device. This beam is used for subsequent communication between the network device and the terminal device.

After measuring the plurality of beams sent by the network device, the terminal device usually selects a to-be-reported beam based on RSRP. In other words, the terminal device reports a plurality of beams with relatively strong RSRP to the network device after measurement. The plurality of beams with relatively strong RSRP are used for subsequent communication between the network device and the terminal device.

However, a correlation between beams reported by the terminal device based on RSRP is usually relatively high, and the beam may not necessarily meet a requirement of the network device. For example, it is assumed that the network device wants to make two beams serve as a backup for each other, that is, if one beam is blocked, communication can be restored by using the other beam. In this case, it is required that the two beams cannot be closely adjacent in space (that is, a relatively low correlation between the two beams is required).

In view of this, this application provides a resource management method. A network device numbers a plurality of beams based on a correlation between any two of the plurality of beams to be sent to a terminal device, and sends configuration information to the terminal device, so that the terminal device considers a beam correlation requirement of the network device when reporting a beam to the network device, determines a correlation between beams based on the configuration information and the index numbers of the beams, and finally reports, to the network device, a beam that meets the correlation requirement of the network device.

The following describes the examples of this application in detail with reference to the accompanying drawings.

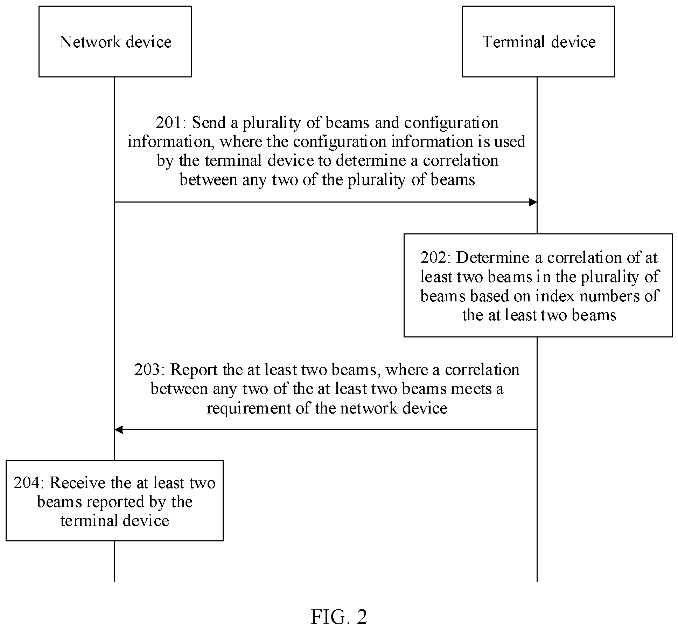

FIG. 2 is covered by the claimed invention and is a schematic flowchart, shown from a perspective of device interaction, of a resource management method 200. As shown in FIG. 2, the method 200 shown in FIG. 2 includes step 201 to step 204. The following describes the steps in the method 200 in detail with reference to FIG. 2.

It should be understood that in this example of this application, the method 200 is described by using an example in which the method 200 is performed by a terminal device and a network device. By way of example, and not limitation, the method 200 may alternatively be performed by a chip used in a terminal device and a chip used in a network device.

In step 201, the network device sends a plurality of beams and configuration information to the terminal device, where the configuration information is used by the terminal device to determine a correlation between any two of the plurality of beams. Correspondingly, in step 201, the terminal device receives the plurality of beams and the configuration information that are sent by the network device.

In step 202, the terminal device determines a correlation of at least two beams in the plurality of beams based on index numbers of the at least two beams.

In step 203, the terminal device reports the at least two beams to the network device, and a correlation between any two of the at least two beams meets a requirement of the network device.

In step 204, the network device receives the at least two beams reported by the terminal device, where the correlation between any two of the at least two beams meets the requirement of the network device, and the plurality of beams include the at least two beams.

It should be noted that in the method 200, all content indicated by the network device to the terminal device by using the configuration information may be determined based on a protocol specification, or based on negotiation between the terminal device and the network device. In other words, sending the configuration information by the network device to the terminal device is not mandatory.

When the configuration information is sent by the network device to the terminal device, the configuration information may be carried in one or a combination of more of the following: a broadcast channel, system message transmission, system message update, layer 1 (for example, a physical layer) control signaling, and higher layer signaling.

For example, the physical layer information may be downlink control information (DCI), and the higher layer signaling may be radio resource control (RRC) signaling or media access control control element (MAC CE) signaling.

It should be understood that in the examples of this application, "protocol" may be a standard protocol in the communications field, for example, may include an LTE protocol, an NR protocol, and a related protocol applied to a future communications system. This is not limited in this application.

The network device numbers the plurality of beams based on a correlation between any two of the plurality of beams to be sent to the terminal device, and sends the configuration information to the terminal device, where the configuration information is used by the terminal device to determine a correlation between beams, so that the terminal device considers a beam correlation requirement of the network device when reporting a beam to the network device, determines a correlation between beams based on the configuration information and the index numbers of the beams, and finally reports, to the network device, a beam that meets the correlation requirement of the network device.

The following uses an example in which the terminal device determines the at least two beams (for example, a first beam and a second beam) in the plurality of beams, to describe a method for determining the correlation between any two of the plurality of beams by the terminal device.

Method 1

The configuration information sent by the network device to the terminal device carries beam set quantity information, and the beam set quantity information includes a quantity of beams included in each beam set and/or a quantity of beam sets. The terminal device determines, based on an index number of the first beam, an index number of the second beam, and the beam set quantity information, beam sets to which the first beam and the second beam belong, and determines a correlation between the first beam and the second beam based on the beam sets to which the first beam and the second beam belong.

Specifically, before sending the plurality of beams to the terminal device, the network device numbers the plurality of beams. When numbering the plurality of beams, the network device determines an index number for each beam with reference to a correlation between beams, that is, numbers the beams so that the index numbers of the beams can reflect a correlation between the beams.

For example, when numbering the plurality of beams, the network device groups the plurality of beams into a plurality of beam sets based on the correlation of the plurality of beams. Each beam set includes some of the plurality of beams. The network device encodes each beam based on a beam set to which the beam belongs, that is, determines an index number of each beam.

For a beam that belongs to a specific beam set, a correlation between the beam and another beam in the beam set is higher than a correlation between the beam and a beam in another beam set other than the beam set.

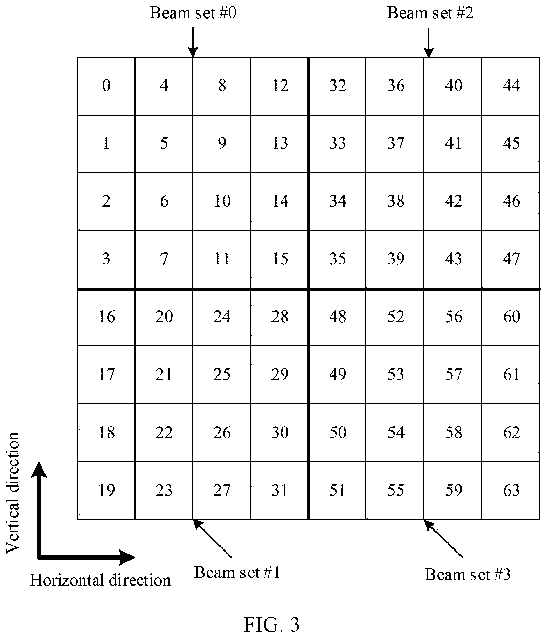

For example, when numbering 64 beams, the network device divides the 64 beams into four groups, and each beam set includes 16 beams. The network device may number beams in each of the four beam sets in a sequence shown in FIG. 3. It can be learned that the network device numbers the plurality of beams according to a method of numbering first in a vertical direction and then in a horizontal direction.

For example, for beam #10 in beam set #0, a correlation between beam #10 and beam #13 is higher than a correlation between beam #10 and beam #40, is also higher than a correlation between beam #10 and beam #26, and is also higher than a correlation between beam #10 and beam #58.

It should be noted that in this example of this application, the beam numbering sequence shown in FIG. 3 is merely used as an example to describe the method for determining the index number of the beam by the network device. However, this example of this application is not limited thereto. For example, the network device may alternatively number the plurality of beams first in a horizontal direction and then in a vertical direction. In addition, the network device may alternatively number the plurality of beams in another agreed numbering sequence. The agreed numbering sequence may be a numbering sequence specified in a protocol or a numbering sequence agreed on by the network device and the terminal device.

After numbering the plurality of beams, the network device may indicate index numbers of different beams to the terminal device by using resource locations carrying the beams. A correspondence between a resource location carrying a beam and an index number of the beam indicated by the resource location may be specified based on a protocol, or may be determined through negotiation between the network device and the terminal device.

A resource carrying a beam may be at least one of a time domain resource, a frequency domain resource, a code domain resource, a power domain resource, or a space domain resource. This is not particularly limited in this example of this application. The following describes, by using an example in which the resource carrying the beam is a time domain resource, a method for determining, by the terminal device, the index number of the beam based on the resource location carrying the beam.

The terminal device may determine, based on a correspondence between a time domain resource location carrying a beam and an index number of a beam indicated by the time domain resource location, an index number of a corresponding beam based on a time domain resource location at which the received beam is located.

For example, the network device sequentially sends the 64 beams to the terminal device in 40 slots (slot). Beams sent in slot #0 are beam #0 and beam #1, beam #0 is carried on orthogonal frequency division multiplexing symbol (OFDM Symbol, OS) #4 to OS #7 in slot #0, and beam #1 is carried on OS #8 to OS #11 in slot #0. Beams sent in slot #3 are beam #6 and beam #7, beam #6 is carried on OS #2 to OS #5 in slot #3, and beam #7 is carried on OS #6 to OS #9 in slot #3. Beams sent in slot #10 are beam #18 and beam #19, beam #18 is carried on OS #4 to OS #7 in slot #10, and beam #19 is carried on OS #8 to OS #11 in slot #10.

When the terminal device receives a beam on OS #4 to OS #7 in slot #10, the terminal device determines that the beam is beam #18. When the terminal device receives a beam on OS #8 to OS #11 in slot #0, the terminal device determines that the beam is beam #1.

In addition, the network device further sends the configuration information to the terminal device, where the configuration information carries the beam set quantity information, and the beam set quantity information includes a quantity of beams included in each beam set and/or a quantity of beam sets.

For example, the configuration information may further carry a total quantity of beams.

For example, the configuration information may further carry a sum of angle ranges covered by all beams in a horizontal direction and a sum of angle ranges covered by the beams in a vertical direction.

Assuming that angle ranges covered by any two beams in a horizontal direction are equal, and angle ranges covered by any two beams in a vertical direction are also equal, the terminal device may calculate, based on the sum of angle ranges covered by all the beams in the horizontal direction, the sum of angle ranges covered by all the beams in the vertical direction, and the total quantity of beams that are carried in the configuration information, an angle range covered by each beam in the horizontal direction and an angle range covered by each beam in the vertical direction.

For example, the configuration information may further include an angle range covered by each beam in the horizontal direction and an angle range covered by each beam in the vertical direction.

For example, the configuration information may further include a sum of angle ranges covered by all beams in a horizontal direction, a sum of angle ranges covered by the beams in a vertical direction, an angle range covered by each beam in the horizontal direction, and an angle range covered by each beam in the vertical direction.

For example, the configuration information may further carry a requirement of the network device for a correlation. For example, the network device indicates, by using the configuration information, the terminal device to report beams with a high correlation, or indicates the terminal device to report beams with a low correlation, or indicates, to the terminal device, whether a correlation between beams needs to be considered during beam reporting.

For example, the configuration information may be further used to indicate a beam reporting manner to the terminal device, for example, reporting a beam in a grouping manner or reporting a beam in a non-grouping manner.

For example, when the configuration information indicates that beams are reported in a grouping manner, the terminal device may group beams based on a correlation, and report beams in a group with a relatively low correlation.

The terminal device determines the index number of the first beam and the index number of the second beam based on time domain resource locations at which the received first beam and second beam are located, determines, based on the index number of the first beam, the index number of the second beam, and the beam set quantity information, the beam sets to which the first beam and the second beam belong, and determines the correlation between the first beam and the second beam based on the beam sets to which the first beam and the second beam belong. When the correlation between the first beam and the second beam meets the requirement of the network device, the terminal device reports the first beam and the second beam to the network device.

For example, the configuration information may further indicate a sequence of beam numbers to the terminal device. For example, the configuration information indicates, to the terminal device, that beams are numbered first in a horizontal direction and then in a vertical direction.

When selecting a to-be-reported beam, the terminal device may use RSRP as a beam quality measurement indicator, that is, ensure that beam quality of a to-be-reported beam can be greater than or equal to a preset RSRP threshold (for example, an example of a preset beam quality threshold).

For example, the terminal device may measure the plurality of beams (for example, a total quantity of beams is 64), and select a beam with largest RSRP as a to-be-reported beam (for example, the first beam). For example, the first beam is beam #11.

Assuming that a quantity of beams included in each beam set indicated by the beam set quantity information is 16, the terminal device may determine, based on the total quantity 64 of beams and the quantity 16 of beams included in each beam set, that the network device groups the 64 beams into four beam sets. In addition, with reference to the sequence of the beam numbers indicated in the configuration information (for example, the configuration information indicates, to the terminal device, that beams are numbered first in a horizontal direction and then in a vertical direction), the terminal device may obtain the beam number pattern shown in FIG. 3. The terminal device may determine, based on the beam number pattern, that beam #11 belongs to beam set #0.

In addition, the terminal device may divide the beam index number 11 by 16, to obtain that a quotient is 0 and a remainder is 11. In this case, the terminal device may determine that beam #11 belongs to beam set #0.

The terminal device may further determine, by using a function floor (11/16), the beam set to which the first beam belongs, where floor is a round-down function.

It should be noted that the foregoing enumerated method in which the terminal device determines the beam set to which the beam belongs is merely an example for description. The network device may explicitly notify the terminal device of specific beams included in each beam set. For example, the network device indicates, to the terminal device by using the configuration information, index numbers of specific beams included in each beam set, and the terminal device may directly determine, based on the index number of the beam, the beam set to which the beam belongs. A method for determining, by the terminal device, a beam set to which a beam belongs is not particularly limited in this example of this application.

Next, the terminal device needs to determine another to-be-reported beam. It is assumed that the network device indicates, by using the configuration information, the terminal device to report beams with a low correlation, the terminal device may determine, as the another to-be-reported beam (for example, the second beam), any beam that is in beam set #1, beam set #2, or beam set #3 and whose RSRP value is greater than a preset RSRP threshold (for example, an example of a beam quality threshold). For example, the terminal device measures beams in beam set #1, beam set #2, or beam set #3, and finally determines beam #43 as the second beam.

It should be noted that an example in which the configuration information carries only a quantity of beams included in each beam set is used for description. For example, the configuration information may further carry only a quantity of beam sets. Assuming that each beam set includes a same quantity of beams, the terminal device may calculate, based on a total quantity of beams and the quantity of beam sets, a quantity of beams included in each beam set. For example, the configuration information may further carry a quantity of beam sets and a quantity of beams included in each beam set. This is not particularly limited in this example of this application.

Method 2

The terminal device determines an index number of the first beam and an index number of the second beam, and determines locations of the first beam and the second beam in a horizontal direction and a vertical direction based on the index number of the first beam and the index number of the second beam; and the terminal device determines the correlation between the first beam and the second beam based on the locations of the first beam and the second beam in the horizontal direction and the vertical direction.

Specifically, in Method 1, the terminal device can determine the correlation between the first beam and the second beam only based on the beam sets to which the first beam and the second beam belong. For example, when the first beam and the second beam belong to a same beam set, the terminal device considers that the correlation between the first beam and the second beam is relatively high. When the first beam and the second beam belong to different beam sets, the terminal device considers that the correlation between the first beam and the second beam is relatively low.

In method 2, a two-dimensional coordinate system is established when a beam is numbered, and each beam is re-numbered in the two-dimensional coordinate system based on a location (for example, an x-coordinate) of the beam in a horizontal direction and a location (for example, a y-coordinate) in a vertical direction. In this way, the terminal device can quantize a correlation between beams based on locations of the beams in the horizontal direction and locations of the beams in the vertical direction, and determine the correlation between the beams based on the quantized correlation.

Using 32 beams in beam set #0 and beam set #2 in the beam number pattern shown in FIG. 3 as an example, in method 2, the network device re-numbers the 32 beams.

For example, the network device uses the horizontal direction and the vertical direction as two-dimensional coordinate axes x and y respectively, and re-numbers the 32 beams based on x and y coordinates of each beam in the two-dimensional plane and a quantity X of beams included in the horizontal direction.

For example, the network device re-numbers the 32 beams according to formula (1):

$$\text{Beam index number} = x + (y - 1) \times X - 1 \ (1)$$

Herein, x is an x-coordinate of a beam in the two-dimensional plane, y is a y-coordinate of a beam in the two-dimensional plane, and X is a quantity of beams included in the horizontal direction.

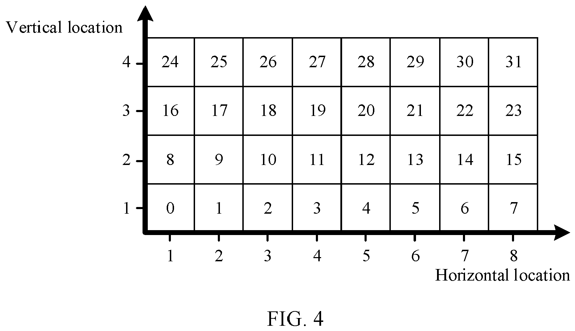

The network device re-numbers the 32 beams according to formula (1). For example, for a beam whose coordinates are (3, 2), an index number obtained after the beam is re-numbered according to formula 1 is 10, and for a beam whose coordinates are (8, 4), an index number obtained after the beam is re-numbered according to formula 1 is 31. Index numbers obtained after the 32 beams are re-numbered are shown in FIG. 4.

It should be noted that the example in which the network device numbers the beams according to formula (1) is merely used to describe the method for determining the index numbers of the beams by the network device. However, this is not limited in this embodiment of this application. For example, the network device may further renumber the 32 beams based on x and y coordinates of each beam in the two-dimensional plane and a quantity Y of beams included in the vertical direction.

In addition, the network device further sends configuration information to the terminal device. The configuration information may carry a requirement of the network device for a correlation. For example, the network device indicates, by using the configuration information, the terminal device to report beams with a high correlation, or indicates the terminal device to report beams with a low correlation, or indicates, to the terminal device, whether a correlation between beams needs to be considered during beam reporting.

For example, the configuration information may be further used to indicate a beam reporting manner to the terminal device, for example, reporting a beam in a grouping manner or reporting a beam in a non-grouping manner.

For example, when the configuration information indicates that beams are reported in a grouping manner, the terminal device may group beams based on a correlation, and report beams in a group with a relatively low correlation.

For example, the configuration information may further carry a total quantity of beams.

For example, the configuration information may further carry a sum of angle ranges covered by all beams in a horizontal direction and a sum of angle ranges covered by the beams in a vertical direction.

Assuming that angle ranges covered by any two beams in a horizontal direction are equal, and angle ranges covered by any two beams in a vertical direction are also equal, the terminal device may calculate, based on the sum of angle ranges covered by all the beams in the horizontal direction, the sum of angle ranges covered by all the beams in the vertical direction, and the total quantity of beams that are carried in the configuration information, an angle range covered by each beam in the horizontal direction and an angle range covered by each beam in the vertical direction.

For example, the configuration information may further include an angle range covered by each beam in the horizontal direction and an angle range covered by each beam in the vertical direction.

For example, the configuration information may further include a sum of angle ranges covered by all beams in a horizontal direction, a sum of angle ranges covered by the beams in a vertical direction, an angle range covered by each beam in the horizontal direction, and an angle range covered by each beam in the vertical direction.

For example, the configuration information may further carry a relationship of an index number of a beam, a quantity of beams in the horizontal direction, and x and y coordinates of the beam in a two-dimensional plane, and the configuration information further carries the quantity of beams in the horizontal direction.

The terminal device may determine x-coordinates and y-coordinates of the first beam and the second beam in the two-dimensional plane based on the relationship of an index number of a beam, a quantity of beams in the horizontal direction, and x and y coordinates of the beam in a two-dimensional plane.

Optionally, the configuration information may further carry a relationship of an index number of a beam, a quantity of beams in the vertical direction, and x and y coordinates of the beam in a two-dimensional plane, and the configuration information further carries the quantity of beams in the vertical direction.

The terminal device may determine x-coordinates and y-coordinates of the first beam and the second beam in the two-dimensional plane based on the relationship of an index number of a beam, a quantity of beams in the vertical direction, and x and y coordinates of the beam in a two-dimensional plane.

Optionally, the configuration information may further carry a relationship of an index number of a beam, a quantity of beams in the horizontal direction, a quantity of beams in the vertical direction, and x and y coordinates of the beam in a two-dimensional plane, and the configuration information further carries the quantity of beams in the horizontal direction and the quantity of beams in the vertical direction.

The terminal device may determine x-coordinates and y-coordinates of the first beam and the second beam in the two-dimensional plane based on the relationship of an index number of a beam, a quantity of beams in the horizontal direction, a quantity of beams in the vertical direction, and x and y coordinates of the beam in a two-dimensional plane.

The terminal device receives a plurality of beams (for example, a quantity of the plurality of beams is 32) sent by the network device, and the terminal device determines index numbers of the 32 beams. For a method for determining an index number of a beam by the terminal device, refer to related descriptions in Method 1. For brevity, details are not described herein again.

When selecting a to-be-reported beam, the terminal device may use RSRP as a beam quality measurement indicator, that is, ensure that beam quality of a to-be-reported beam can be greater than or equal to a preset RSRP threshold.

For example, the terminal device measures the 32 beams, and selects a beam with largest RSRP as a to-be-reported beam (for example, the first beam). For example, the first beam is beam #12.

When determining a location of beam #12 in the horizontal direction and a location of beam #12 in the vertical direction, the terminal device may determine the location of the first beam in the horizontal direction and the location of the first beam in the vertical direction based on the relationship of an index number of a beam, a quantity of beams in the horizontal direction, and x and y coordinates of the beam in a two-dimensional plane that is carried in the configuration information, that is, determine x and y coordinates of the first beam in the two-dimensional plane.

For example, the relationship of an index number of a beam, a quantity of beams in the horizontal direction or a quantity of beams in the vertical direction, and x and y coordinates of the beam in a two-dimensional plane satisfies the relational expression (1). The terminal device may determine, through calculation, the x-coordinates and the y-coordinates of the first beam and the second beam in the two-dimensional plane according to the relational expression (1).

In addition, the terminal device may further transform the relational expression (1) to obtain a relational expression (2):

$$(\text{Beam index number} + 1)/X = (y - 1)... x \ (2)$$

Herein, (y - 1) is a quotient of (beam index number + 1)/X, and x is a remainder of (beam index number + 1)/X.

The terminal device may calculate the x-coordinates and the y-coordinates of the first beam and the second beam in the two-dimensional plane according to the relational expression (2).

It is assumed that the quantity of beams in the horizontal direction that is carried in the configuration information is 8, and the terminal device determines, according to formula (2), that the x-coordinate and the y-coordinate of the first beam in the two-dimensional plane are (5, 2).

Next, the terminal device needs to determine another to-be-reported beam. It is assumed that the network device indicates, by using the configuration information, the terminal device to report beams with a high correlation. The terminal device determines that an RSRP value of beam #30 is greater than the preset RSRP threshold, and further determines that x and y coordinates of beam #30 are (7, 4). In this case, the terminal device determines, based on the x and y coordinates (5, 2) of beam #12 and the x and y coordinates of beam #30, that a correlation between beam #12 and beam #30 is relatively high. Therefore, the terminal device uses beam #30 as the another to-be-reported beam (for example, the second beam), and finally reports beam #12 and beam #30 to the network device.

For example, the configuration information may further carry a Euclidean distance threshold. When a Euclidean distance between the first beam and the second beam is greater than or equal to the preset Euclidean distance threshold, the terminal device considers that the correlation between the first beam and the second beam meets the requirement of the network device.

For example, a Euclidean distance between beams satisfies a relational expression (3):

$$d = f(x_1, x_2, y_1, y_2) \ (3)$$

Herein, $x_1$ and $y_1$ are the x-coordinate and y-coordinate of the first beam, and $x_2$ and $y_2$ are the x-coordinate and y-coordinate of the second beam.

As an example rather than a limitation, the relational expression (3) may satisfy:

$$d = \sqrt{(x_1 - x_2)^2 + (y_1 - y_2)^2} \quad (4)$$

It should be noted that the foregoing merely uses an example in which the terminal device determines an x-coordinate and a y-coordinate of a beam based on the relationship of an index number of a beam, a quantity of beams in the horizontal direction, and x and y coordinates of the beam in a two-dimensional plane, to describe the method for determining an index number of a beam by the terminal device. However, this example of this application is not limited thereto. For example, the terminal device may further determine an x-coordinate and a y-coordinate of a beam based on the relationship of an index number of a beam, a quantity of beams in the vertical direction, and x and y coordinates of the beam in a two-dimensional plane that is carried in the configuration information. For another example, the terminal device may further determine an x-coordinate and a y-coordinate of a beam based on the relationship of an index number of a beam, a quantity of beams in the horizontal direction, a quantity of beams in the vertical direction, and x and y coordinates of the beam in a two-dimensional plane that is carried in the configuration information.

It should be noted that, that when a Euclidean distance between the first beam and the second beam is greater than or equal to the preset Euclidean distance threshold, the terminal device considers that the correlation between the first beam and the second beam meets the requirement of the network device is merely an example for description. In this example of this application, when the Euclidean distance between the first beam and the second beam is less than or equal to the preset Euclidean distance threshold, the terminal device may consider that the correlation between the first beam and the second beam does not meet the requirement of the network device, and does not report the second beam to the network device. Alternatively, another Euclidean distance threshold may be preset (a value of the another Euclidean distance threshold is different from a value of the preset Euclidean distance threshold mentioned above). When the Euclidean distance between the first beam and the second beam is less than or equal to the another preset Euclidean distance threshold, the terminal device may consider that the correlation between the first beam and the second beam meets the requirement of the network device.

Method 3

The terminal device determines an index number of the first beam and an index number of the second beam, and determines a Hamming distance between the first beam and the second beam based on the index number of the first beam and the index number of the second beam. The terminal device determines a correlation between the first beam and the second beam based on the Hamming distance between the first beam and the second beam.

Specifically, it can be learned from the beam number pattern shown in FIG. 3 in Method 1 that, for beams that belong to different beam sets but are adjacent to each other in the beam number pattern, according to the description in Method 1, a correlation between this type of beams is relatively low. However, this type of beams actually have a relatively high correlation.

To prevent the terminal device from determining beams with a relatively high correlation as beams with a relatively low correlation according to Method 1, in Method 3, the network device numbers beams according to a Hamming distance minimum principle. The Hamming distance minimum principle means that after index numbers of the beams are converted into binary bit sequences, a quantity of different bits between binary bit sequences corresponding to index numbers of adjacent beams is the smallest.

Optionally, the Hamming distance minimum principle means that a Hamming distance between beams with a high correlation is small, and a Hamming distance between beams with a low correlation is large.

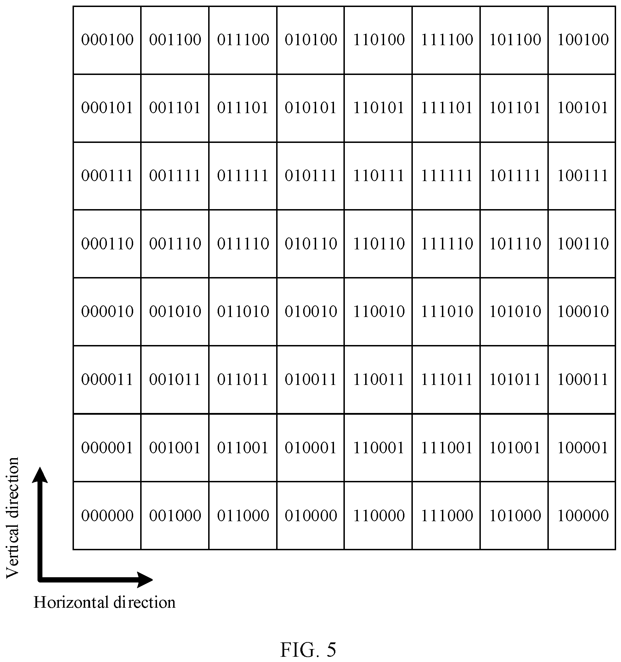

FIG. 5 shows a beam number pattern of binary bit sequences corresponding to the index numbers of the beams after the beams in FIG. 3 are re-numbered according to the Hamming distance minimum principle. The Hamming distance minimum principle herein is embodied as that values of only one bit in binary bit sequences of adjacent beams are different. For example, only a value of the fifth bit in the binary bit sequence {101100} of the first beam in the first row is different from a value of the fifth bit in the binary bit sequence { 101110 } of the second beam in the first row, and a Hamming distance between the two beams is denoted as 1.

The network device numbers the beams according to the Hamming distance minimum principle, so that values of only one bit in binary bit sequences corresponding to index numbers of any two adjacent beams are different.

It should be noted that the foregoing merely uses an example in which values of only one bit in binary bit sequences corresponding to index numbers of any two adjacent beams are different, to describe how the network device numbers the beams according to the Hamming distance minimum principle. However, this embodiment of this application is not limited thereto. For example, after numbering the beams, the network device may enable a quantity of bits with different values in binary bit sequences corresponding to any two adjacent beams to be 2. This is not particularly limited in this embodiment of this application.

In addition, the network device further sends configuration information to the terminal device. The configuration information may carry a requirement of the network device for a correlation. For example, the network device indicates, by using the configuration information, the terminal device to report beams with a high correlation, or indicates the terminal device to report beams with a low correlation, or indicates, to the terminal device, whether a correlation between beams needs to be considered during beam reporting.

For example, the configuration information may be further used to indicate a beam reporting manner to the terminal device, for example, reporting a beam in a grouping manner or reporting a beam in a non-grouping manner.

For example, when the configuration information indicates that beams are reported in a grouping manner, the terminal device may group beams based on a correlation, and report beams in a group with a relatively low correlation.

For example, the configuration information may further carry a total quantity of beams.

For example, the configuration information may further carry a sum of angle ranges covered by all beams in a horizontal direction and a sum of angle ranges covered by the beams in a vertical direction.

Assuming that angle ranges covered by any two beams in a horizontal direction are equal, and angle ranges covered by any two beams in a vertical direction are also equal, the terminal device may calculate, based on the sum of angle ranges covered by all the beams in the horizontal direction, the sum of angle ranges covered by all the beams in the vertical direction, and the total quantity of beams that are carried in the configuration information, an angle range covered by each beam in the horizontal direction and an angle range covered by each beam in the vertical direction.

For example, the configuration information may further include an angle range covered by each beam in the horizontal direction and an angle range covered by each beam in the vertical direction.

For example, the configuration information may further include a sum of angle ranges covered by all beams in a horizontal direction, a sum of angle ranges covered by the beams in a vertical direction, an angle range covered by each beam in the horizontal direction, and an angle range covered by each beam in the vertical direction.

For example, the configuration information may be further used to indicate, to the terminal device, a quantity of bits included in a binary bit sequence used to indicate an index number of each beam. For example, in FIG. 5, a binary bit sequence including six bits is used to indicate a beam index number.

The terminal device receives a plurality of beams (for example, a quantity of the plurality of beams is 64) sent by the network device, and the terminal device determines index numbers of the 64 beams. For a method for determining an index number of a beam by the terminal device, refer to related descriptions in Method 1. For brevity, details are not described herein again.

When selecting a to-be-reported beam, the terminal device may use RSRP as a beam quality measurement indicator, that is, ensure that beam quality of a to-be-reported beam can be greater than or equal to a preset beam quality threshold.

For example, the terminal device measures the 64 beams, and selects a beam with largest RSRP as a to-be-reported beam (for example, the first beam). For example, the first beam is beam #11.

The terminal device converts the index number 11 of beam #11 into a binary bit sequence {001011} according to the Hamming distance minimum principle.

Beam #11 is located in the third row from bottom to top and the second column from left to right in FIG. 5.

Next, the terminal device needs to determine another to-be-reported beam. It is assumed that the network device indicates, by using the configuration information, the terminal device to report beams with a low correlation. The terminal device determines that an RSRP value of beam #40 is greater than the preset RSRP threshold, and further determines that a binary bit sequence corresponding to beam #40 is {101000}. In this case, the terminal device determines, based on the binary bit sequence {001011} corresponding to beam #11 and the binary bit sequence {101000} corresponding to beam #40, that a correlation between beam #11 and beam #40 is relatively low. Therefore, the terminal device uses beam #40 as the another to-be-reported beam (for example, the second beam), and finally reports beam #11 and beam #40 to the network device. Beam #40 is located at a location in the first row from bottom to top and in the seventh column from left to right in FIG. 5. The configuration information may further carry a Hamming distance threshold. When a Hamming distance between the first beam and the second beam is greater than or equal to the preset Hamming distance threshold, the terminal device considers that the correlation between the first beam and the second beam meets the requirement of the network device.

For example, the network device requires to report beams whose correlation is greater than the preset Hamming distance threshold, where the preset Hamming distance threshold is 2. If a quantity of bits with different values in binary bit sequences corresponding to beam #11 and beam #40 is 3, beam #11 and beam #40 are beams that meet a correlation requirement of the network device, and the terminal device reports beam #11 and beam #40 to the network device.

It should be noted that, that when a Hamming distance between the first beam and the second beam is greater than or equal to the preset Hamming distance threshold, the terminal device considers that the correlation between the first beam and the second beam meets the requirement of the network device is merely an example for description. In this embodiment of this application, when the Hamming distance between the first beam and the second beam is less than or equal to the preset Hamming distance threshold, the terminal device may consider that the correlation between the first beam and the second beam does not meet the requirement of the network device, and does not report the second beam to the network device. Alternatively, another Hamming distance threshold may be preset (a value of the another Hamming distance threshold is different from a value of the preset Hamming distance threshold mentioned above). When the Hamming distance between the first beam and the second beam is less than or equal to the another preset Hamming distance threshold, the terminal device may consider that the correlation between the first beam and the second beam meets the requirement of the network device.

It should be further noted that, that a quantity of bits included in a binary bit sequence used to indicate an index number of each beam is indicated by the network device to the terminal device by using the configuration information is merely an example used for description. However, this is not limited in this embodiment of this application. For example, the quantity of bits included in the binary bit sequence used to indicate the index number of each beam may also be calculated by the terminal device. For example, the terminal device may calculate, according to formula (5), the quantity of bits included in the binary bit sequence for the index number of each beam:

$$ n = \log 2 (m) \quad (5) $$

Herein, n represents the quantity of bits included in the binary bit sequence for the index number of each beam, and m may be a maximum value of a beam number or a quantity of actually transmitted beams. This is not particularly limited in this embodiment of this application.

It should be noted that, when the calculation result n obtained by using formula (5) is not an integer, a rounding operation may be performed on the calculation result n.

It should be further noted that, the configuration information may further indicate, to the terminal device, which method among Method 1 to Method 3 is used to number the beams, so that the terminal device correspondingly uses a corresponding method to determine a correlation between beams.

It should be further noted that, that the measurement indicator of beam quality is RSRP is merely an example used for description. However, this application is not limited thereto. For example, the measurement indicator of beam quality may alternatively be reference signal received quality (RSRQ) or a signal to interference plus noise ratio (SINR). This is not particularly limited in this embodiment of this application.

In this example of this application, for the beam number patterns shown in FIG. 3, FIG. 4, and FIG. 5, coverage areas of all beams are the same. For example, a coverage range of each beam in a horizontal direction is 10° to 20°, and a coverage range of each beam in a vertical direction is 30° to 40°.

However, when coverage ranges of beams in the horizontal direction or the vertical direction are different, the network device may number the beams by using the following method.

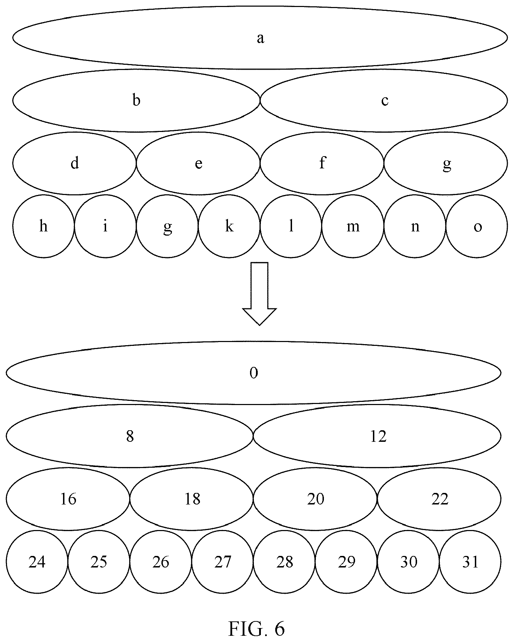

For example, the network device may number the beams inconsecutively. As shown in FIG. 6, a coverage range of beam #a in the horizontal direction is eight times a coverage range of any one of beam #h, beam #i, beam #j, beam #k, beam #1, beam #m, beam #n, and beam #o in the horizontal direction; a coverage range of beam #b or beam #c in the horizontal direction is four times a coverage range of any one of beam #h, beam #i, beam #j, beam #k, beam #l, beam #m, beam #n, and beam #o in the horizontal direction; and a coverage range of any one of beam #d, beam #e, beam #f, and beam #g in the horizontal direction is two times a coverage range of any one of beam #h, beam #i, beam #j, beam #k, beam #1, beam #m, beam #n, and beam #o in the horizontal direction.

The network device may number beam #a as beam #0, number beam #b and beam #c as beam #8 and beam #12 respectively, number beam #d, beam #e, beam #f, and beam #g as beam #16, beam #18, beam #20, and beam #22 respectively, and number beam #h, beam #i, beam #j, beam #k, beam #1, beam #m, beam #n, and beam #o as beam #24, beam #25, beam #26, beam #27, beam #28, beam #29, beam #30, and beam #31 respectively.

It should be noted that the vertical direction in this example of this application may also be referred to as a pitch direction. This is not particularly limited in this example of this application.

It should be further noted that there is an association relationship between a beam index number and a type of a reference signal resource in this example of this application. For example, when the reference signal resource is a CSI-RS resource, the beam index number may be a CSI-RS resource identifier. When the reference signal resource is an SSB resource, the beam index number is an SSB resource identifier. When the reference signal resource is an SRS resource, the beam index number may be an SRS resource index. The SSB resource identifier may also be referred to as an SSB index (SSB index).

It should be further noted that when the reference signal resource is a CSI-RS resource, an SSB resource may be used as a beam indication of the CSI-RS resource, and a correlation between beams whose reference signal resources are CSI-RS resources may be represented as a correlation between beams whose reference signal resources are SSB resources.

It should be further noted that the Hamming distance or the Euclidean distance in this example of this application is merely an example for description. For example, in this example of this application, the Hamming distance or the Euclidean distance may alternatively be any one of a Manhattan distance, a Chebyshev distance, and a correlation coefficient.

Correspondingly, the preset Hamming distance threshold or Euclidean distance threshold in this example of this application may alternatively be any one of a preset Manhattan distance threshold, a preset Chebyshev distance threshold, and a preset correlation coefficient threshold.

It should be further noted that the method in this example of this application is also applicable to the beam numbering method of the terminal device, and the terminal device may notify the network device of a correlation between transmit beams or receive beams of the terminal device by using the same method.

For example, a signal sent by the terminal device to the network device may be an SRS or an uplink sounding signal. It should be further understood that the foregoing descriptions are merely intended to help a person skilled in the art better understand the examples of this application. It is clear that a person skilled in the art may make various modifications or changes based on the foregoing examples. For example, some steps in the foregoing method 200 may be unnecessary, or some steps may be newly added. Alternatively, any two or more of the foregoing examples may be combined.

It should be further understood that sequence numbers of the foregoing processes do not mean execution sequences. The execution sequences of the processes should be determined based on functions and internal logic of the processes, and should not constitute any limitation on implementation processes of the examples of this application.

It should be further understood that in the examples of this application, "presetting" and "predefinition" may be implemented by prestoring, in a device (including, for example, a terminal device and a network device), corresponding code, a corresponding table, or another manner that may be used to indicate related information. A specific implementation is not limited in this application.

It should be further understood that in the examples of this application, unless otherwise stated or there is a logic conflict, terms and/or descriptions between different examples are consistent and may be mutually referenced, and technical features in different examples may be combined based on an internal logical relationship thereof, to form a new example.

The foregoing describes in detail an example of the resource management method provided in this application. It may be understood that to implement the foregoing functions, the terminal device and the network device include corresponding hardware structures and/or software modules for performing the functions. A person skilled in the art should easily be aware that, with reference to the examples described in the examples disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application.

The following describes a communications apparatus according to this application.

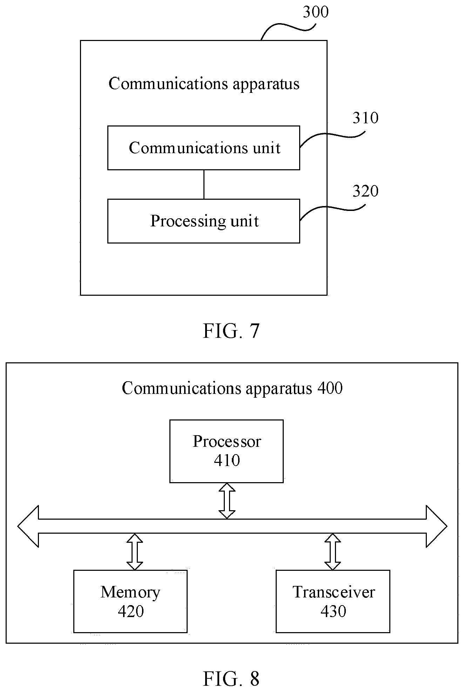

FIG. 7 is a schematic structural diagram of a communications apparatus according to this application. The communications apparatus 300 includes a communications unit 310 and a processing unit 320.

The communications unit 310 is configured to receive a plurality of beams sent by a network device.

The processing unit 320 is configured to determine a correlation of at least two beams in the plurality of beams based on index numbers of the at least two beams.

The communications unit 310 is further configured to report the at least two beams to the network device, where a correlation between any two of the at least two beams meets a requirement of the network device.

Optionally, the communications unit 310 may include a receiving unit (module) and a sending unit (module), which are configured to perform the method 200 and the steps of receiving a beam and sending a to-be-reported beam by the terminal device in FIG. 2. Optionally, the communications apparatus 300 may further include a storage unit, configured to store instructions executed by the communications unit 310 and the processing unit 320.

The communications apparatus 300 is a communications device, or may be a chip in a communications device. When the communications apparatus is a communications device, the processing unit may be a processor, and the communications unit may be a transceiver. The communications device may further include a storage unit, and the storage unit may be a memory. The storage unit is configured to store an instruction, and the processing unit executes the instruction stored in the storage unit, so that the communications device performs the foregoing method. When the communications apparatus is a chip in a communications device, the processing unit may be a processor, the communications unit may be an input/output interface, a pin, a circuit, or the like. The processing unit executes an instruction stored in the storage unit, so that the communications apparatus performs an operation performed by the terminal device in the foregoing method 200. The storage unit may be a storage unit (for example, a register or a cache) in the chip, or may be a storage unit (for example, a read-only memory or a random access memory) that is outside the chip and that is in the communications device.

It may be clearly understood by a person skilled in the art that, for steps performed by the communications apparatus 300 and corresponding beneficial effects, refer to related descriptions of the terminal device in the foregoing method 200. For brevity, details are not described herein again.

It should be understood that, the communications unit 310 may be implemented by a transceiver, and the processing unit 320 may be implemented by a processor. The storage unit may be implemented by a memory. As shown in FIG. 8, a communications apparatus 400 may include a processor 410, a memory 420, and a transceiver 430.

The communications apparatus 300 shown in FIG. 7 or the communications apparatus 400 shown in FIG. 8 can implement the method 200 and the steps performed by the terminal device in FIG. 2. For similar descriptions, refer to the descriptions in the corresponding method. To avoid repetition, details are not described herein again.

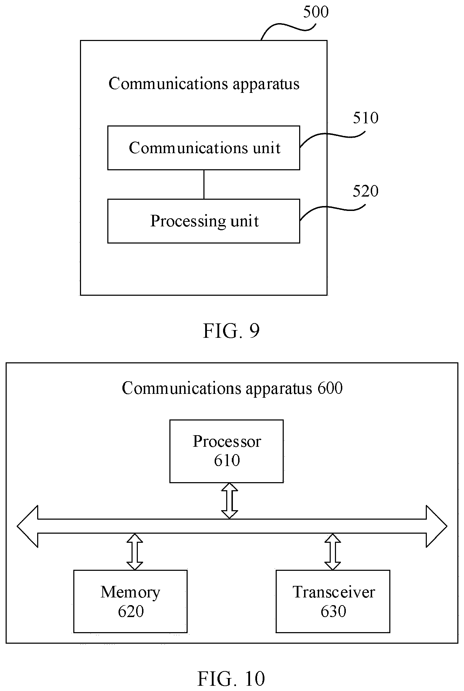

FIG. 9 is a schematic structural diagram of a communications apparatus according to this application. The communications apparatus 500 includes a communications unit 510.

The communications unit 510 is configured to send a plurality of beams and configuration information to a terminal device, where the configuration information is used by the terminal device to determine a correlation between any two of the plurality of beams.

The communications unit 510 is further configured to receive at least two beams reported by the terminal device, where a correlation between any two of the at least two beams meets a requirement of the network device, and the plurality of beams include the at least two beams.

Optionally, the communications apparatus 500 further includes a processing unit 520, and the processing unit 520 is configured to generate the configuration information.

Optionally, the communications unit 510 may include a receiving unit (module) and a sending unit (module), which are configured to perform the method 200 and the steps of sending a beam and receiving a reported beam by the network device in FIG. 2. Optionally, the communications apparatus 500 may further include a storage unit, configured to store instructions executed by the communications unit 510 and the processing unit 520.

The communications apparatus 500 is a communications device, or may be a chip inside a communications device. When the communications apparatus is a communications device, the processing unit may be a processor, and the communications unit may be a transceiver. The communications device may further include a storage unit, and the storage unit may be a memory. The storage unit is configured to store an instruction, and the processing unit executes the instruction stored in the storage unit, so that the communications device performs the foregoing method. When the apparatus is a chip in a communications device, the processing unit may be a processor, the communications unit may be an input/output interface, a pin, a circuit, or the like. The processing unit executes an instruction stored in the storage unit, so that the communications device performs an operation performed by the network device in the foregoing method 200. The storage unit may be a storage unit (for example, a register or a cache) in the chip, or may be a storage unit (for example, a read-only memory or a random access memory) that is outside the chip and that is in the communications device.

It may be clearly understood by a person skilled in the art that, for steps performed by the communications apparatus 500 and corresponding beneficial effects, refer to related descriptions of the network device in the foregoing method 200. For brevity, details are not described herein again.

It should be understood that, the communications unit 510 may be implemented by a transceiver, and the processing unit 520 may be implemented by a processor. The storage unit may be implemented by a memory. As shown in FIG. 10, a communications apparatus 600 may include a processor 610, a memory 620, and a transceiver 630.

The communications apparatus 500 shown in FIG. 9 or the communications apparatus 600 shown in FIG. 10 can implement the method 200 and the steps performed by the network device in FIG. 2. For similar descriptions, refer to the descriptions in the corresponding method. To avoid repetition, details are not described herein again.

The network device and the terminal device in the foregoing apparatus examples completely correspond to the network device and the terminal device in the method examples. A corresponding module or unit performs a corresponding step. For example, the communications unit (transceiver) performs a sending step and/or a receiving step in the method examples, and another step other than the sending step and the receiving step may be performed by the processing unit (processor). For a function of a specific unit, refer to the corresponding method examples. The sending unit and the receiving unit may form a transceiver unit, and a transmitter and a receiver may form a transceiver, to jointly implement receiving and sending functions. There may be one or more processors.

It should be understood that division of the foregoing units is merely function division, and there may be another division method during actual implementation.

The terminal device or the network device may be a chip, and the processing unit may be implemented by hardware or software. When being implemented by the hardware, the processing unit may be a logic circuit, an integrated circuit, or the like. When being implemented by the software, the processing unit may be a general-purpose processor, and is implemented by reading software code stored in a storage unit. The storage unit may be integrated into the processor, or may be located outside the processor and exist independently.

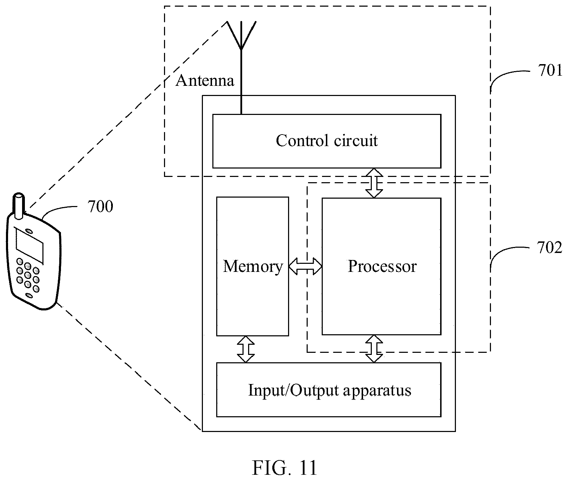

FIG. 11 is a schematic structural diagram of a terminal device 700 according to this application. For ease of description, FIG. 11 shows only main components of the terminal device. As shown in FIG. 11, the terminal device 700 includes a processor, a memory, a control circuit, an antenna, and an input/output apparatus.

The processor is mainly configured to: process a communication protocol and communication data; control the entire terminal device; execute a software program; and process data of the software program. For example, the processor is configured to support the terminal device in performing an action described in the examples of the foregoing signal transmission methods. The memory is mainly configured to store the software program and the data. The control circuit is mainly configured to perform conversion between a baseband signal and a radio frequency signal, and process the radio frequency signal. A combination of the control circuit and the antenna may also be referred to as a transceiver that is mainly configured to receive/send a radio frequency signal in a form of an electromagnetic wave. The input/output apparatus, for example, a touchscreen, a display screen, or a keyboard, is mainly configured to receive data entered by a user and output data to the user.

After the terminal device is powered on, the processor may read a software program in a storage unit, explain and execute an instruction of the software program, and process data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal to the outside through the antenna in a form of the electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 11 shows only one memory and only one processor. An actual terminal device may have a plurality of processors and a plurality of memories. The memory may also be referred to as a storage medium, a storage device, or the like. This is not limited in the examples of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 11 is integrated with functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to be used in different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program. The processor executes the software program to implement a baseband processing function.

For example, in this example of this application, the antenna and the control circuit that have receiving and sending functions may be considered as a transceiver unit 701 of the terminal device 700, and the processor having a processing function may be considered as a processing unit 702 of the terminal device 700. As shown in FIG. 11, the terminal device 700 includes the transceiver unit 701 and the processing unit 702. The transceiver unit may also be referred to as a transceiver, a transceiver machine, a transceiver apparatus, or the like. Optionally, a component that is in the transceiver unit 701 and that is configured to implement a receiving function may be considered as a receiving unit, and a component that is in the transceiver unit 701 and that is configured to implement a sending function may be considered as a sending unit. In other words, the transceiver unit 701 includes the receiving unit and the sending unit. For example, the receiving unit may also be referred to as a receiver machine, a receiver, a receive circuit, or the like, and the sending unit may be referred to as a transmitter, a transmitter machine, a transmit circuit, or the like.

The terminal device 700 shown in FIG. 11 can implement all processes related to the terminal device in the method example in FIG. 2. The operations and/or the functions of the modules in the terminal device 700 are intended to implement corresponding procedures in the foregoing method example. For details, refer to the descriptions in the foregoing method example. To avoid repetition, detailed descriptions are properly omitted herein.

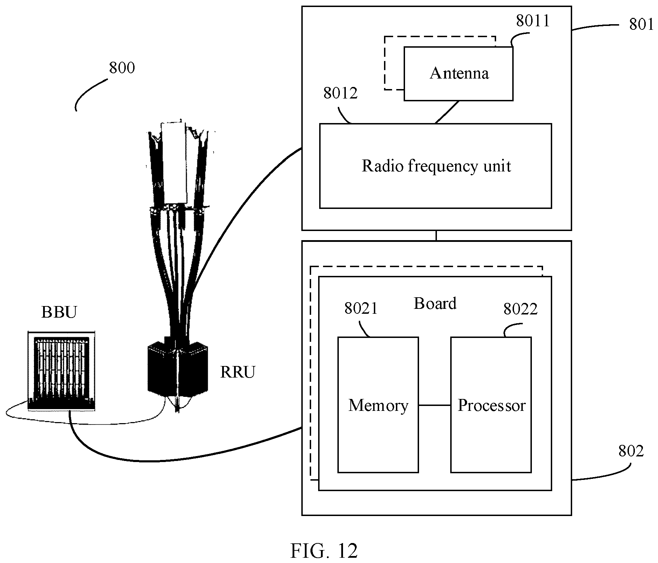

FIG. 12 is a schematic structural diagram of a network device according to an example of this application, for example, may be a schematic structural diagram of a base station. As shown in FIG. 12, the network device 800 may be applied to the system shown in FIG. 1, and performs functions of the network device in the foregoing method examples.

The network device may be used in the communications system shown in FIG. 1, and perform a function of the network device in the foregoing method examples. The base station 800 may include one or more radio frequency units, such as a remote radio unit (RRU) 801 and one or more baseband units (BBU) (which may also be referred to as digital units (DU)) 802. The RRU 801 may be referred to as a transceiver unit, a transceiver machine, a transceiver circuit, a transceiver, or the like, and may include at least one antenna 8011 and a radio frequency unit 8012. The RRU 801 part is mainly configured to perform receiving and sending of a radio frequency signal and conversion between a radio frequency signal and a baseband signal, for example, configured to send the PDCCH and/or the PDSCH in the foregoing method examples. The BBU 802 part is mainly configured to: perform baseband processing, control the base station, and so on. The RRU 801 and the BBU 802 may be physically disposed together, or may be physically separated, that is, in a distributed base station.

The BBU 802 is a control center of the base station, may also be referred to as a processing unit, and is mainly configured to complete a baseband processing function such as channel coding, multiplexing, modulation, or spreading. For example, the BBU (the processing unit) 802 may be configured to control the base station to perform an operation procedure related to the network device in the method examples.

In an example, the BBU 802 may include one or more boards. A plurality of boards may jointly support a radio access network (such as an LTE network) of a single access standard, or may separately support radio access networks (such as an LTE network, a 5G network, or another network) of different access standards. The BBU 802 further includes a memory 8021 and a processor 8022. The memory 8021 is configured to store a necessary instruction and necessary data. The processor 8022 is configured to control the base station to perform necessary actions. For example, the processor 2022 is configured to control the base station to perform an operation procedure related to the network device in the foregoing method examples. The memory 8021 and the processor 8022 may serve one or more boards. In other words, each board may be independently disposed with a memory and a processor. Alternatively, a plurality of boards may share a same memory and a same processor. In addition, each board may further disposed with a necessary circuit.

It should be understood that, the network device 800 shown in FIG. 12 can implement each process of the network device in the method example in FIG. 2. The operations and/or the functions of the modules in the network device 800 are intended to implement corresponding procedures in the foregoing method example. For details, refer to the descriptions in the foregoing method example. To avoid repetition, detailed descriptions are properly omitted herein.

An example of this application further provides a processing apparatus, including a processor and an interface. The processor is configured to perform the resource management method in any one of the foregoing method examples.

It should be noted that the communications unit in the examples of this application may also be referred to as a transceiver unit (module).

It should be noted that one beam corresponds to one or more SSBs or CSI-RSs, and one beam may usually correspond to one SSB or CSI-RS. Therefore, in the foregoing examples, the beam may be replaced with an SSB or a CSI-RS.

It should be understood that the processing apparatus may be a chip. For example, the processing apparatus may be a field programmable gate array (FPGA), an application specific integrated chip (ASIC), a system on chip (SoC), a central processing unit (CPU), a network processor (NP), a digital signal processor (DSP), a micro controller unit (MCU), a programmable logic device (PLD), or another integrated chip.

In an implementation process, steps in the foregoing methods can be implemented by using a hardware integrated logic circuit in the processor, or by using instructions in a form of software. The steps of the methods disclosed with reference to the examples of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in the examples of this application may be an integrated circuit chip, and has a signal processing capability. In an implementation process, steps in the foregoing method examples can be implemented by using a hardware integrated logic circuit in the processor, or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in the examples of this application. The general-purpose processor may be a microprocessor, or the processor may be any conventional processor or the like. The steps of the methods disclosed with reference to the examples of this application may be directly performed by a hardware decoding processor, or may be performed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the examples of this application may be a volatile memory or a nonvolatile memory, or may include a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and is used as an external cache. Through example but not limitative description, RAMs in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory of the systems and methods described in this specification includes but is not limited to these and any memory of another appropriate type.

An example of this application further provides a communications system, including the foregoing transmit end device and receive end device. For example, the transmit end device is a network device, and the receive end device is a terminal device; or the transmit end device is a terminal device, and the receive end device is a network device.

An example of this application further provides a computer-readable medium. The computer-readable medium stores a computer program. When the computer program is executed by a computer, the resource management method in any one of the foregoing method examples is implemented.

An example of this application further provides a computer program product. When the computer program product is executed by a computer, the resource management method in any one of the foregoing method examples is implemented.

An example of this application further provides a system chip. The system chip includes a processing unit and a communications unit. The processing unit may be, for example, a processor, and the communications unit may be, for example, an input/output interface, a pin, or a circuit. The processing unit may execute a computer instruction, so that a chip in the communications apparatus performs any resource management method provided in the foregoing examples of this application.

Optionally, the computer instruction is stored in a storage unit.

Optionally, the storage unit is a storage unit in the chip, for example, a register or a cache, or the storage unit may be a storage unit in a terminal but outside the chip, for example, a read-only memory (ROM) or another type of static storage device capable of storing static information and instructions, or a random access memory (RAM). The processor mentioned in any one of the foregoing descriptions may be a CPU, a microprocessor, an ASIC, or one or more integrated circuits used to control program execution of the feedback information transmission method. The processing unit and the storage unit may be decoupled, are separately disposed on different physical devices, and are connected in a wired or wireless manner to implement functions of the processing unit and the storage unit, to support the system chip in implementing various functions in the foregoing examples. Alternatively, the processing unit and the memory may be coupled to a same device.

All or some of the foregoing examples may be implemented by using software, hardware, firmware, or any combination thereof. When software is used to implement the examples, all or some of the examples may be implemented in a form of a computer program product. The computer program product includes one or more computer instructions. When the computer instructions are loaded or executed on a computer, the procedures or functions according to the examples of this application are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (DVD)), a semiconductor medium (for example, a solid-state drive (SSD)), or the like.

It should be understood that the foregoing describes a communication method used in downlink transmission in a communications system. However, this application is not limited thereto. Optionally, a solution similar to the foregoing solution may also be used in uplink transmission. To avoid repetition, details are not described herein again.

The network device and the terminal device in the foregoing apparatus examples completely correspond to the network device and the terminal device in the method examples. A corresponding module or unit performs a corresponding step. For example, the sending module (transmitter) performs a sending step in the method examples, the receiving module (receiver) performs a receiving step in the method examples, and another step other than the sending step and the receiving step may be performed by the processing module (processor). For a function of a specific module, refer to the corresponding method examples. The sending module and the receiving module may form a transceiver module, and the transmitter and the receiver may form a transceiver, to jointly implement receiving and sending functions. There may be one or more processors.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following" or a similar expression thereof indicates any combination of the following, including any combination of one or more of the following. For example, at least one of a, b, or c may indicate: a, b, c, a and b, a and c, b and c, or a, b, and c, where a, b, and c may be singular or plural.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the entire specification does not necessarily refer to a same embodiment. In addition, these particular characteristics, structures, or features may be combined in one or more embodiments in any appropriate manner. It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the internet interacting with other systems by using the signal).

It should be understood that the term "and/or" in this specification describes only an association relationship between associated objects and represents that three relationships may exist. For example, A and/or B may represent the following three cases: Only A exists, both A and B exist, and only B exists.

A person of ordinary skill in the art may be aware that illustrative logical blocks (illustrative logical block) and steps (step) described with reference to the embodiments disclosed in this specification may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application.

It may be clearly understood by a person skilled in the art that for the purpose of convenient and brief description, for a detailed working process of the described system, apparatus, and unit, refer to a corresponding process in the foregoing method embodiments.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded or executed on a computer, the procedures or functions according to the embodiments of this application are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

The terms "uplink" and "downlink" in this application are used to describe a data/information transmission direction in a specific scenario. For example, an "uplink" direction is usually a direction in which data/information is transmitted from a terminal to a network side, or a direction in which data/information is transmitted from a distributed unit to a centralized unit, and a "downlink" direction is usually a direction in which data/information is transmitted from a network side to a terminal, or a direction in which data/information is transmitted from a centralized unit to a distributed unit. It may be understood that the "uplink" and the "downlink" are only used to describe transmission directions of data/information, and neither a specific start device nor a specific end device of the data/information transmission is limited.

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

In the embodiments of this application, unless otherwise stated or there is a logical conflict, terms and/or descriptions between different embodiments are consistent and may be mutually referenced, and technical features in different embodiments may be combined according to an internal logical relationship thereof, to form a new embodiment.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application.

## Claims

1. A resource management method, comprising:

   receiving (201), by a terminal device (120), a plurality of beams sent by a network device (110);
   determining (202), by the terminal device (120), a correlation of at least two beams in the plurality of beams based on index numbers of the at least two beams; and
   reporting (203), by the terminal device (120), the at least two beams to the network device (110), wherein a correlation between any two of the at least two beams meets a requirement of the network device;
   wherein the at least two beams comprise a first beam and a second beam, and the first beam and the second beam are any two beams in the at least two beams; and
   **characterized in that** the determining (202), by the terminal device (120), a correlation of at least two beams based on index numbers of the at least two beams comprises:

   determining, by the terminal device (120), a Hamming distance between the first beam and the second beam based on the index numbers of the first beam and the second beam; and
   determining, by the terminal device (120), the correlation between the first beam and the second beam based on the Hamming distance, wherein the numbering of the plurality of beams is such that after index numbers of the plurality of beams are converted into binary bit sequences, a quantity of different bits between binary bit sequences corresponding to index numbers of adjacent beams is the smallest.

2. The method according to claim 1, wherein the method further comprises receiving by the terminal device (120) a configuration information from the network device, wherein the configuration information carries a Hamming distance threshold, and the Hamming distance threshold is used by the terminal device (120) to determine the correlation between the first beam and the second beam.

3. The method according to any one of claims 1 to 2, wherein beam quality of any one of the at least two beams is greater than or equal to a preset beam quality threshold.

4. A resource management method, wherein the method comprises:

> sending, by a network device (110), a plurality of beams and configuration information to a terminal device (120), wherein the configuration information is used by the terminal device to determine a correlation between any two of the plurality of beams; and
> receiving, by the network device (110), at least two beams reported by the terminal device (120), wherein a correlation between any two of the at least two beams meets a requirement of the network device, and the plurality of beams comprise the at least two beams; and
> **characterized in that**
> the configuration information carries a Hamming distance threshold and wherein the numbering of the plurality of beams is such that after index numbers of the plurality of beams are converted into binary bit sequences, a quantity of different bits between binary bit sequences corresponding to index numbers of adjacent beams is the smallest.

5. The method according to claim 4, wherein beam quality of any one of the at least two beams is greater than or equal to a preset beam quality threshold.

6. A communications apparatus (120), configured to perform the method according to any one of claims 1 to 3.

7. A resource management apparatus (110), configured to perform the method according to any one of claims 4 to 5.

8. A computer-readable storage medium storing a computer program which, when executed by a terminal device, cause the terminal device to carry out the method according to any one of claims 1 to 3.

9. A computer-readable storage medium storing a computer program which, when executed by a network device, cause the network device to carry out the method according to any one of claims 4 or 5.

10. A computer program comprising instructions which, when executed by a terminal device, cause the terminal device to carry out the method according to any one of claims 1 to 3.

11. A computer program comprising instructions which, when executed by a network device, cause the network device to carry out the method according to any one of claims 4 or 5.

**Patentansprüche**

1. Ressourcenverwaltungsverfahren, umfassend:

> Empfangen (S201) einer Mehrzahl von Strahlen, die von einer Netzwerkvorrichtung (110) gesendet werden, durch eine Endgerätevorrichtung (120),
> Bestimmen (202) einer Korrelation mindestens zweier Strahlen in der Mehrzahl von Strahlen durch die Endgerätevorrichtung (120) basierend auf Indexzahlen der mindestens zwei Strahlen, und
> Melden (203) der mindestens zwei Strahlen durch die Endgerätevorrichtung (120) an die Netzwerkvorrichtung (110), wobei eine Korrelation zwischen zwei beliebigen der mindestens zwei Strahlen eine Anforderung der Netzwerkvorrichtung erfüllt;
> wobei die mindestens zwei Strahlen einen ersten Strahl und einen zweiten Strahl umfassen und der erste Strahl und der zweite Strahl beliebige zwei Strahlen der mindestens zwei Strahlen sind; und
> **dadurch gekennzeichnet, dass** das Bestimmen (202) einer Korrelation mindestens zweier Strahlen durch die Endgerätevorrichtung (120) basierend auf Indexzahlen der mindestens zwei Strahlen umfasst:
>
>> Bestimmen eines Hamming-Abstands zwischen dem ersten Strahl und dem zweiten Strahl durch die Endgerätevorrichtung (120) basierend auf den Indexzahlen des ersten Strahls und des zweiten Strahls; und
>> Bestimmen der Korrelation zwischen dem ersten Strahl und dem zweiten Strahl durch die Endgerätevorrichtung (120) basierend auf dem Hamming-Abstand, wobei die Nummerierung der Mehrzahl von Strahlen derart ist, dass nach dem Umwandeln von Indexzahlen der Mehrzahl von Strahlen in binäre Bitfolgen eine Menge verschiedener Bits zwischen binären Bitfolgen, die den Indexzahlen benachbarter Strahlen entsprechen, am kleinsten ist.

2. Verfahren nach Anspruch 1, wobei das Verfahren ferner ein Empfangen einer Konfigurationsinformation von der Netzwerkvorrichtung durch die Endgerätevorrichtung (120) umfasst, wobei die Konfigurationsinformation eine Hamming-Abstandsschwelle mitführt und die Hamming-Abstandsschwelle von der Endgerätevorrichtung (120) zum Bestimmen der Korrelation zwischen dem ersten Strahl und dem zweiten Strahl verwendet wird.

**3.** Verfahren nach einem der Ansprüche 1 bis 2, wobei eine Strahlqualität eines beliebigen der mindestens zwei Strahlen größer als oder gleich einer voreingestellten Strahlqualitätsschwelle ist.

**4.** Ressourcenverwaltungsverfahren, wobei das Verfahren umfasst:

Senden einer Mehrzahl von Strahlen und einer Konfigurationsinformation durch eine Netzwerkvorrichtung (110) an eine Endgerätevorrichtung (120), wobei die Konfigurationsinformation von der Endgerätevorrichtung zum Bestimmen einer Korrelation zwischen beliebigen zweien der Mehrzahl von Strahlen verwendet wird; und Empfangen mindestens zweier Strahlen, die von der Endgerätevorrichtung (120) gemeldet werden, durch die Netzwerkvorrichtung (110), wobei eine Korrelation zwischen zwei beliebigen der mindestens zwei Strahlen eine Anforderung der Netzwerkvorrichtung erfüllt; und die Mehrzahl von Strahlen die mindestens zwei Strahlen umfasst, und
**dadurch gekennzeichnet, dass**
die Konfigurationsinformation eine Hamming-Abstandsschwelle mitführt, und wobei die Nummerierung der Mehrzahl von Strahlen derart ist, dass nach dem Umwandeln von Indexzahlen der Mehrzahl von Strahlen in binäre Bitfolgen eine Menge verschiedener Bits zwischen binären Bitfolgen, die den Indexzahlen benachbarter Strahlen entsprechen, am kleinsten ist.

**5.** Verfahren nach Anspruch 4, wobei eine Strahlqualität eines beliebigen der mindestens zwei Strahlen größer als oder gleich einer voreingestellten Strahlqualitätsschwelle ist.

**6.** Kommunikationsvorrichtung (120), die zum Durchführen des Verfahrens nach einem der Ansprüche 1 bis 3 konfiguriert ist.

**7.** Ressourcenverwaltungsvorrichtung (110), die zum Durchführen des Verfahrens nach einem der Ansprüche 4 bis 5 konfiguriert ist.

**8.** Computerlesbares Speichermedium, das ein Computerprogramm speichert, das bei Ausführung durch einen Endgerätevorrichtung die Endgerätevorrichtung zum Durchführen des Verfahrens nach einem der Ansprüche 1 bis 3 veranlasst.

**9.** Computerlesbares Speichermedium, das ein Computerprogramm speichert, das bei Ausführung durch eine Netzwerkvorrichtung die Netzwerkvorrichtung zum Durchführen des Verfahrens nach einer

Ansprüche 4 oder 5 veranlasst.

**10.** Computerprogramm, umfassend Anweisungen, die bei Ausführung durch eine Endgerätevorrichtung die Endgerätevorrichtung zum Durchführen des Verfahrens nach einem der Ansprüche 1 bis 3 veranlassen.

**11.** Computerprogramm, umfassend Anweisungen, die bei Ausführung durch eine Netzwerkvorrichtung die Netzwerkvorrichtung zum Durchführen des Verfahrens nach einem der Ansprüche 4 oder 5 veranlassen.

**Revendications**

**1.** Procédé de gestion de ressources, comprenant :

la réception (201), par un dispositif de terminal (120), d'une pluralité de faisceaux envoyés par un dispositif de réseau (110) ;
la détermination (202), par le dispositif de terminal (120), d'une corrélation d'au moins deux faisceaux dans la pluralité de faisceaux sur la base de numéros d'indice des au moins deux faisceaux ; et
l'émission d'un rapport (203), par le dispositif de terminal (120), des au moins deux faisceaux, au dispositif de réseau (110), dans lequel une corrélation entre deux quelconques des au moins deux faisceaux satisfait à une condition du dispositif de réseau ;
dans lequel les au moins deux faisceaux comprennent un premier faisceau et un second faisceau, et le premier faisceau et le second faisceau sont deux quelconques faisceaux dans les au moins deux faisceaux ; et
**caractérisé en ce que** la détermination (202), par le dispositif de terminal (120), d'une corrélation d'au moins deux faisceaux sur la base de numéros d'indice des au moins deux faisceaux comprend :

la détermination, par le dispositif de terminal (120), d'une distance de Hamming entre le premier faisceau et le second faisceau sur la base des numéros d'indice du premier faisceau et du second faisceau ; et
la détermination, par le dispositif de terminal (120), de la corrélation entre le premier faisceau et le second faisceau sur la base de la distance de Hamming, dans lequel la numérotation de la pluralité de faisceaux est telle que, après que des numéros d'indice de la pluralité de faisceaux sont convertis en séquences de bits binaires, une quantité de différents bits entre des séquences de bits binaires correspondant à des numéros d'indice de faisceaux adjacents soit la plus petite.

2. Procédé selon la revendication 1, dans lequel le procédé comprend en outre la réception, par le dispositif de terminal (120), d'informations de configuration, à partir du dispositif de réseau, dans lequel les informations de configuration comportent un seuil de distance de Hamming, et le seuil de distance de Hamming est utilisé par le dispositif de terminal (120) pour déterminer la corrélation entre le premier faisceau et le second faisceau.

3. Procédé selon l'une quelconque des revendications 1 et 2, dans lequel la qualité de faisceau de l'un quelconque des au moins deux faisceaux est supérieure ou égale à un seuil prédéfini de qualité de faisceau.

4. Procédé de gestion de ressource, dans lequel le procédé comprend :

   l'envoi, par un dispositif de réseau (110), d'une pluralité de faisceaux et d'informations de configuration à un dispositif de terminal (120), dans lequel les informations de configuration sont utilisées par le dispositif de terminal pour déterminer une corrélation entre deux quelconques de la pluralité de faisceaux ; et
   la réception, par le dispositif de réseau (110), d'au moins deux faisceaux dont le rapport a été émis par le dispositif de terminal (120), dans lequel une corrélation entre deux quelconques des au moins deux faisceaux satisfait à une condition du dispositif de réseau, et la pluralité de faisceaux comprennent les au moins deux faisceaux ; et
   **caractérisé en ce que**
   les informations de configuration comportent un seuil de distance de Hamming et dans lequel la numérotation de la pluralité de faisceaux est telle que, après que des numéros d'indice de la pluralité de faisceaux sont convertis en séquences de bits binaires, une quantité de différents bits entre des séquences de bits binaires correspondant à des numéros d'indice de faisceaux adjacents soit la plus petite.

5. Procédé selon la revendication 4, dans lequel une qualité de faisceau de l'un quelconque des au moins deux faisceaux est supérieure ou égale à un seuil prédéfini de qualité de faisceau.

6. Appareil de communication (120), configuré pour réaliser le procédé selon l'une quelconque des revendications 1 à 3.

7. Appareil de gestion de ressource (110), configuré pour réaliser le procédé selon l'une quelconque des revendications 4 et 5.

8. Support de stockage lisible par ordinateur stockant un programme d'ordinateur qui, lorsqu'il est exécuté par un dispositif de terminal, fait en sorte que le dispositif de terminal effectue le procédé selon l'une quelconque des revendications 1 à 3.

9. Support de stockage lisible par ordinateur stockant un programme d'ordinateur qui, lorsqu'il est exécuté par un dispositif de réseau, fait en sorte que le dispositif de réseau effectue le procédé selon l'une quelconque des revendications 4 ou 5.

10. Programme d'ordinateur comprenant des instructions qui, lorsqu'elles sont exécutées par un dispositif de terminal, font en sorte que le dispositif de terminal effectue le procédé selon l'une quelconque des revendications 1 à 3.

11. Programme d'ordinateur comprenant des instructions qui, lorsqu'elles sont exécutées par un dispositif de réseau, font en sorte que le dispositif de réseau effectue le procédé selon l'une quelconque des revendications 4 ou 5.

FIG. 1

FIG. 2

Beam set #0         Beam set #2

| 0 | 4 | 8 | 12 | 32 | 36 | 40 | 44 |
|---|---|---|----|----|----|----|----|
| 1 | 5 | 9 | 13 | 33 | 37 | 41 | 45 |
| 2 | 6 | 10 | 14 | 34 | 38 | 42 | 46 |
| 3 | 7 | 11 | 15 | 35 | 39 | 43 | 47 |
| 16 | 20 | 24 | 28 | 48 | 52 | 56 | 60 |
| 17 | 21 | 25 | 29 | 49 | 53 | 57 | 61 |
| 18 | 22 | 26 | 30 | 50 | 54 | 58 | 62 |
| 19 | 23 | 27 | 31 | 51 | 55 | 59 | 63 |

Vertical direction

Horizontal direction    Beam set #1       Beam set #3

FIG. 3

FIG. 4

| | | | | | | | |
|---|---|---|---|---|---|---|---|
| 000100 | 001100 | 011100 | 010100 | 110100 | 111100 | 101100 | 100100 |
| 000101 | 001101 | 011101 | 010101 | 110101 | 111101 | 101101 | 100101 |
| 000111 | 001111 | 011111 | 010111 | 110111 | 111111 | 101111 | 100111 |
| 000110 | 001110 | 011110 | 010110 | 110110 | 111110 | 101110 | 100110 |
| 000010 | 001010 | 011010 | 010010 | 110010 | 111010 | 101010 | 100010 |
| 000011 | 001011 | 011011 | 010011 | 110011 | 111011 | 101011 | 100011 |
| 000001 | 001001 | 011001 | 010001 | 110001 | 111001 | 101001 | 100001 |
| 000000 | 001000 | 011000 | 010000 | 110000 | 111000 | 101000 | 100000 |

Vertical direction

Horizontal direction

FIG. 5

FIG. 6

300

Communications apparatus

310
Communications unit

320
Processing unit

FIG. 7

Communications apparatus 400

Processor
410

Memory
420

Transceiver
430

FIG. 8

500

Communications apparatus

510

Communications unit

520

Processing unit

FIG. 9

Communications apparatus 600

Processor
610

Memory
620

Transceiver
630

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017099830 A1
- US 2014334566 A1
- CN 108347272 A
- US 2018212666 A1
- US 2018069606 A1